# NEUE EUROPÄISCHE PATENTSCHRIFT

(11) **EP 0 800 543 B2**
(45) Veröffentlichungstag und Bekanntmachung des Hinweises auf die Entscheidung über den Einspruch: **13.08.2003**
(45) Hinweis auf die Patenterteilung: 10.03.1999
(21) Anmeldenummer: 95942137.1
(22) Anmeldetag: 13.12.1995
(51) Int. Cl.: C08G 12/34, D21H 17/49

(54) **MODIFIZIERTE MELAMINHARZE UND DEREN VERWENDUNG ZUR HERSTELLUNG VON POST-FORMING-LAMINATEN**
MODIFIED MELAMINE RESINS AND THEIR USE FOR MANUFACTURING POST-FORMED LAMINATES
RESINES DE MELAMINE MODIFIEES ET LEUR UTILISATION POUR FABRIQUER DES STRATIFIES POSTFORMES

(30) Priorität: 28.12.1994 AT 2420949
(43) Veröffentlichungstag der Anmeldung: 15.10.1997
(73) Patentinhaber: Agrolinz Melamin GmbH, A-4021 Linz (AT)
(72) Erfinder: PIEH, Stefan, A-4060 Leonding (AT); HEGER, Friedl, A-4040 Linz (AT); CONTI, Natale, I-21030 Varese (IT); CAMAIONI, Domenico, I-21052 Busto Arsizio (IT)
(74) Vertreter: Gross, Felix
(86) Internationale Anmeldenummer: EP9504920
(87) Internationale Veröffentlichungsnummer: WO96020230

(56) Entgegenhaltungen:
- BE-A3- 1 005 822
- DE-A- 4 111 142
- GB-A- 872 185
- Ullmann's Enzyklopädie der technischen Chemie, 3.Neubearbeitete Auflage, Verlag Chemie GmbH, Band 7, Kapitel Aminoplaste, Seite 417, Spalte 2, vorletzter Absatz bis Seite 418, Spalte 1 unten

## Beschreibung

Melaminharz-Laminate auf Basis von imprägnierten Papieren finden aufgrund ihrer guten Lichtechtheit, Abriebfestigkeit, Chemikalienbeständigkeit, Glutbeständigkeit und Oberflächenhärte ein großes Einsatzgebiet als Dekor- und Schutzoberflächen.

Derartige Schichtpreßstoffe,die durch Imprägnieren von Trägerbahnen aus Textilien, Papier oder Glasvliesen mit wäßrigen Lösungen von Melamin-Formaldehyd-Vorkondensaten und anschließendes Trocknen und Aushärten bei Temperaturen von über 100 °C erhalten werden, sind beispielsweise in EP-A-0 077 067 beschrieben. In der EP-B1-0 268 809 sind Melarninharzfolien beschrieben, die durch Beschichten von Papieren mit einer mindestens 70 Gew.%igen wäßrigen Lösung eines methylveretherten Melaminharzes erhalten werden.
Der Nachteil dieser bekannten Melaminharze und Melaminharz-Laminate liegt insbesondere darin, daß sie beim Aushärten eine relativ große Schwindung aufweisen, daß ihre mechanischen Eigenschaften, wie beispielsweise Kochwasserresistenz, in vielen Fällen nicht ausreichend sind, und daß sie vor allem sehr spröde sind und keine post-forrning-Eigenschaften aufweisen.

Aus US 4,424,261 ist bekannt, daß die Verwendung von Hydroxyalkyimelaminen als Modifizierungsmittel für Melamin-Formaldehydharze zu einer Verbesserung der post-forming-Eigenschaften führt. Der Nachteil dieser Modifizierungsmittel ist jedoch deren Instabilität, wodurch sie nicht leicht verfügbar und weiters nur schwer handhabbar sind, da sie stark zur Vernetzung mit sich selbst neigen.
Andere Modifizierungsmittel, wie beispielsweise Guanamine, die zu post-forming-Eigenschaften der Harze führen, sind in EP-A1-0 561 432 beschrieben. Guanamine, besonders solche mit aromatischen Kernen wie Benzoguanamin,
weisen jedoch keine ausreichende Resistenz gegen Licht auf, wodurch die rnodifizierten Harze leicht vergilben. Weiters wirkt sich die geringe Löslichkeit der Guanamine im Reaktionsmediurn nachteilig auf den Herstellprozeß der Harze aus.

GB-A-872 185 beschreibt einen zur Herstellung von Laminaten geeigneten Harz-Sirup, enthaltend in einer wäßrigen Lösung 40 bis 65 Gew.% eines Kondensates aus Melamin, Formaldehyd und Dicyandiamid. Gegebenenfalls können zusätzlich 1 bis 10 Gew.% an Ethylenglykol oder Polyethylenglykol zugegeben werden. Diese Lösung zeichnet sich durch eine verlängerte Lagerstabilität aus. Eigenschaften wie post-forming oder Kochwasserresistenz werden nicht geoffenbart.

Es war somit notwendig ein Modifizierungsmittel für Melaminharze zu finden, das die Nachteile der bisher bekannten Modifizierungsmittel nicht aufweist und die post-forming-Eigenschaften der Melaminharze ohne ihre Kochwasserresistenz zu reduzieren stark verbessert.
Unerwarteterweise wurde nun gefunden, daß derartige Melaminharze durch verwendung einer Kombination aus bestimmten Polyalkoholen und Dicyandiamid als Modifizierungsmittel erhalten werden.

Gegenstand der vorliegenden Erfindung sind demnach modifizierte Melamin-Formaldehydharze mit verbesserten post-forming-Eigenschaften und hoher Kochwasserresistenz, die dadurch gekennzeichnet sind, dass sie aus einem Kondensat aus Formaldehyd, Melamin und Modifizierungsmittel, enthaltend eine Kombination aus
a) 5 bis 25 Gew.%, bezogen auf Melamin, an Dicyandiamid und
b) 8 bis 30 Gew.%, bezogen auf Melamin, an einem der wasserlöslichen Polyalkohole Trimethylolpropan, Trimethylolethan, Trishydroxyethylisocyanurat, Neopentylglycol, 1,4-Dimethylolcyclohexan, 4-Methyl-2,4-pentandiol, 1,6-Hexandiol, 3-Methyl-1,3,5-Pentandiol oder 2,2,4-Trimethyl-1,3-pentandiol oder Gemischen davon, bestehen, wobei das molare Verhältnis von Formaldehyd zu Melamin 1,2 bis 2,5 beträgt.

Die erfindungsgemäßen Melaminharze sind somit durch eine Kombination aus Dicyandiamid mit den Polyalkoholen Trimethylolpropan, Trimethylolethan, Trishydroxyethylisocyanurat, Neopentylglycol, 1,4-Dimethylolcyclohexan, 4-Methyl-2,4-pentandiol, 1,6-Hexandiol, 3-Methyl-1,3,5-pentantriol und 2,2,4-Trimethyl-1,3-pentandiol modifiziert.

Die Polyalkohole können sowohl als Einzelverbindung als auch als Gemisch mehrerer Polyalkohole zugesetzt werden. Die Menge an Polyalkohol im erfindungsgemäßen Melaminharz beträgt 8 bis 30 Gew.%, bezogen auf das eingesetzte Melamin. Bevorzugt werden 12 bis 22 Gew.% an Polyalkoholen eingesetzt.

Die Polyalkohole werden erfindungsgemäß in Kombination mit Dicyandiamid als Modifizierungsmittel für Melamin-Formaldehydharze verwendet. Die Menge an Dicyandiamid liegt dabei bei 5 bis 25 Gew.%, bezogen auf das eingesetzte Melamin, bevorzugt bei 8 bis 18 Gew.%.
Das Molverhältnis von Formaldehyd zu Melamin liegt bei den zu modifizierenden Harzen bei 1,2 : 1 bis 2,5: 1. Bevorzugt werden Formaldehyd und Melamin in einem Molverhältnis von 1:4 bis 2.0 : eingesetzt.

Die erfindungsgemäß modifizierten Melamin-Formaldehydharze werden erhalten, indem man Melamin mit Formaldehyd in bekannter Weise in wässriger Lösung kondensiert und die Komponenten Polyalkohol und Dicyandiamid vor oder während der Kondensation in der oben genannten Menge zumischt. Es können dabei die Komponenten Polyalkohol und Dicyandiamid sowohl als Mischung als auch als Einzelkomponenten zugegeben werden. Zur Herstellung der erfindungsgemäßen Harze kann jedoch auch eine fertige Mischung bestehend aus Melamin, Formaldehyd, Dicyandiamid und Polyalkohol eingesetzt werden.

Ein weiterer Gegenstand der vorliegenden Erfindung ist demnach die Verwendung einer Mischung aus Formaldehyd, Melamin, 5 bis 25 Gew.%, bezogen auf Melamin, an Dicyandiamid und 8 bis 30 Gew.%, bezogen auf Melamin, an wasserlöslichem Polyalkohol nach Anspruch 1, die Formaldehyd und Melamin in einem molaren Verhältnis von 1,2 bis 2,5 enthält, zur Herstellung von modifizierten Melamin-Formaldehydharzen.

Zur Beschleunigung der Reaktion bei der Modifikation der Melaminharze mit der erfindungsgemäßen Kombination können übliche Katalysatoren, wie z. B. p-Toluolsulfonsäure, in Mengen von etwa 0,1 bis 1 Gew.%, bezogen auf die Gesamtmenge des Melaminharzes, zugesetzt werden.

Den Harzen können weiters auch hydrolysierbare Salze schwacher bis starker Carbonsäuren, Sulfonsäuren oder Mineralsäuren, beispielsweise Diethanolaminacetat, Morpholin, Diethanolamin, Ethanolaminhydrochlorid, Ethylendiaminacetat, Ammoniumrhodanid, Ammoniumlactat, Ethylendiaminphosphat oder das Dimethylethanolaminsalz der p-Toluolsulfonsäure zugefügt werden, um die Härtung zu beschleunigen, ohne daß sich dadurch die Elastizität der Harze verschlechtert.

Bei der Herstellung der Harze können gegebenenfalls noch zusätzliche Modifizierungsmittel, ε-Caprolactam oder aromatische Sultonsäureamide, wie p-Toluolsulfonamide, zugegeben werden. Die Kondensation der Harze wird in der Regel bis zu einer begrenzten Wasserverdünnbarkeit fortgeführt.

Die erfindungsgemäß modifizierten Melamin-Formaldehydharze eignen sich besonders zur Herstellung von Dekor- oder Schutzoberflächen mit ausgezeichneten post-forming-Eigenschaften. Die Herstellung der Vorprodukte (Filme) der Dekor-oder Schutzoberflächen erfolgt durch Imprägnieren von Papier-oderGewebebahnen. Papierbahnen sind bevorzugt aus Dekorpapier oder Kraftpapier. Gewebebahnen bestehen dabei bevorzugt aus einem Vlies, Gewebe oder Gelege aus Glas-, Kohle-, Keramik- oder Aramidfasern. Entsprechend den Anforderungen an die Eigenschaften der so hergestellten Laminate, können auch Gemische verschiedener Fasern, unidirektionale Endlosfasern oder mehrere Lagen gleicher oder verschiedener Verstärkungsbahnen eingesetzt werden.

Die Imprägnierung dieser Bahnen mit den erfindungsgemäß modifizierten Melamin-Formaldehydharzen erfolgt beispielsweise durch Tauchen oder Sprühen und anschließendem Abquetschen oder Rakeln bis zum gewünschten Harzgehalt der Filme. Der Harzgehaft ist vor allem von den geforderten Eigenschaften der Filme bzw. der Laminate sowie von der Art der Faserverstärkung abhängig und liegt üblicherweise bei 30 bis 60 Gew.%, bezogen auf das mit Harz imprägnierte Trägermaterial.

Entsprechend derViskosität und Konsistenz des Melaminharzes erfolgt die Imprägnierung üblicherweise bei Temperaturen von etwa 20 bis 600 °C. Um ein Ausfließen des Melaminharzes aus dem Trägermaterial zu verhindern, werden die Filme im Anschluß an die Imprägnierung bei etwa 80 bis 160 °C auf einen bestimmten Restfeuchtegehalt getrocknet, wobei das leichtfließende Imprägnierharz je nach Temperatur und Länge der thermischen Behandlung mehr oder weniger unter teilweiser Aushärtung und Vernetzung reagiert.
Im diesem Zustand ist der Film bei etwa Raumtemperatur lager- und transportfähig.Mehrere Lagen von imprägnierten Kraft- und Dekorpapieren werden dann bei einer Temperatur von 20 bis 180 °C und unter einem Druck von 25 bis 100 bar zum Laminat verpreßt. Aufgrund der ausgezeichneten post-forming-Eigenschaften kann das Laminat unter weiterer Vernetzung des Melaminharzes bei Temperaturen von 80 bis 1800 °C unter Druck zum gewünschten Formteil verformt werden.

Die aus den erfindungsgemäß modifizierten Harzen erhaltenen Laminate zeichnen sich vor allem durch eine hohe Kochwasserresistenz, sowie durch eine verbesserte Elastizität ihrer Oberfläche aus, sodaß geringe Biegeradien unter Vermeidung von Rißbildung erreicht werden können.

### Beispiel 1:

in einem Behälter mit Rührer und Rückflußkühler wurden 126 Teile (1 mol) Melamin, 137,5 Teile (1,65 mol) an 36 %iger Formaldehydlösung, 20 Teile (0,15 mol) Trimethylolpropan, 17,5 Teile (0,21 mol) Dicyandiamid und 66 Teile entionisiertem Wasser bei 90 °C und einem pH-Wert von 9,5 - 10 (auf rechterhalten durch Natriumhydroxyd) kon- densiert bis eine Wasserverdünnbarkeit von etwa 1,2 (bei 20 °C), (1,0 Volumenteile (Harz) 1,2 Volumenteile (H₂O)) erreicht war.

### Beispiel 2 bis 4:

Analog Beispiel 1 wurden weitere modifizierte Melaminharze hergestellt. Der Anteil an Melamin betrug jeweils 126 Teile (1 mol), der Anteil an 36 %igem Formaldehyd betrug 137,5 Teile (1,65 rnol). Es wurden jeweils 66 Teile entionisiertes Wasser verwendet.
Der verwendete Polyalkohol, dessen Anteil, sowie der Anteil an Dicyandiamid sind aus Tabelle 1 ersichtlich.

**Tabelle 1**

| | Polyalkohol | Dicyandiamid |
|---|---|---|
| Beispiel 2 | 1,4-Dimethylolcyclohexan 20 Teile/0,14 mol | 17,5 Teile/0,21 mol |
| Beispiel 3 | 1,6-Hexandiol 20 Teile/0,17 mol | 17,5 Teile/0,21 mol |
| Beispiel 4 | Trimethylolpropan 28 Teile/0,21 mol | 10 Teile/0,12 mol |

### Vergleichsbeispiel V1:

Analog Beispiel 1 wurde ein Melaminharz mit 37,5 Teilen (0,28 mol) an Trimethylolpropan, jedoch ohne Dicyandiamid hergestellt.

### Beispiel 5:

[0024) Die Harze aus Beispiel 1 bis 4, sowie aus V1 wurden mit 0,2 Gew.% Härter EC15 (Chemie Linz Castellanza) 20 Minuten auf einen Trübungspunkt von 100 °C katalysiert. Anschließend wurde Dekorpapier sowie Kraftpapier, das als Kernpapier fungierte, imprägniert. Das Dekorpapier (95g/m²) enthielt 55 Gew.%. Harzanteil und 6 Gew.% flüchtige Bestandteile (bezogen auf das imprägnierte Papier), das Kernpapier (80 g/m²) enthielt 47 Gew.% Harzanteil und ebenfalls 6 Gew.% flüchtige Bestandteile (bezogen auf das imprägnierte Papier). Eine Schicht imprägniertes Dekorpapier und 3 Lagen Kernpapier wurden sodann mit einem Druck von 30 bar bei 175 °C für 20 Sekunden zusammengepreßt. Die so erhaltenen Laminate wurden auf ihre Nachverformbarkeit und ihre Kochwasserresistenz untersucht. Die Ergebnisse sind aus Tabelle 2 ersichtlich.

**Tabelle 2**

| | Nachverformbarkeit Durchmesser in mm (*) | Kochwasserresistenz | |
|---|---|---|---|
| | | Blasenbildung nach 2 und 6 h | Wasserabsorption % EN 438-2 |
| Beispiel 1 | ≤ 3 | keine Blasen | 10,3 |
| Beispiel 2 | 3 | keine Blasen | 9,5 |
| Beispiel 3 | ≤ 3 | wenige kleine Blasen | 9,7 |
| Beispiel 4 | 3 | wenige kleine Blasen | 11,3 |
| V1 | 8 | deutliche Blasen | 15,1 |

| | | | |
|---|---|---|---|
| (*) kleinster Durchmesser um das Laminat um einen Metallzylinder, aufgeheizt auf 160 °C, gebogen werden kann, ohne zu reißen. | | | |

## Patentansprüche

1. Modifizierte Melamin-Formaldehydharze mit verbesserten post-forming-Eigenschaften und hoher Kochwasserresistenz, **dadurch gekennzeichnet, daß** sie aus einem Kondensat aus Formaldehyd, Melamin und Modifizierungsmittel, enthaltend eine Kombination aus
a) 5 bis 25 Gew.%, bezogen auf Melamin, an Dicyandiamid und
b) 8 bis 30 Gew.%, bezogen auf Melamin, an einem der wasserlöslichen Polyalkohole Trimethylolpropan, Trimethylolethan, Trishydroxyethylisocyanurat, Neopentylglycol, 1,4-Dimethylolcyclohexan, 4-Methyl-2,4-pentandiol, 1,6-Hexandiol, 3-Methyl-1,3,5-Pentandiol oder 2,2,4-Trimethyl-1,3-pentandiol oder Gemischen davon,
bestehen, wobei das molare Verhältnis von Formaldehyd zu Melamin 1,2 bis 2,5 beträgt.

2. Modifizierte Melamin-Formaldehydharze nach Anspruch 1, **dadurch gekennzeichnet, daß** das Modifizierungsmittel eine Kombination aus
a) 8 bis 18 Gew.%, bezogen auf Melamin, an Dicyandiamid und
b) 12 bis 22 Gew.%, bezogen auf Melamin, an wasserlöslichem Polyalkohol gemäß Anspruch 1 enthält.

3. Modifizierte Melamin-Formaldehydharze nach Anspruch 1, **dadurch gekennzeichnet, daß** sie Formaldehyd und Melamin in einem molaren Verhältnis von 1,4 bis 2:1 enthalten.

4. Verwendung einer Mischung aus Formaldehyd, Melamin, 5 bis 25 Gew.%, bezogen auf Melamin, an Dicyandiamid und 8 bis 30 Gew.%, bezogen auf Melamin, an wasserlöslichem Polyalkohol gemäß Anspruch 1, die Formaldehyd und Melamin in einem molaren Verhältnis von 1,2 bis 2,5 enthält, zur Herstellung von modifizierten Melamin-Formaldehydharzen.

5. Melaminharz-Laminate, **dadurch gekennzeichnet, daß** sie aus mit modifizierten Melaminharzen gemäß Anspruch 1 imprägnierten Papier- oder Gewebebahnen bestehen.

6. Verfahren zur Herstellung von Melaminharz-Laminaten, **dadurch gekennzeichnet, daß** eine Papier- oder Gewebebahn mit einem modifizierten Melaminharz imprägniert wird, das aus einem Kondensat aus Formaldehyd, Melamin und Modifizierungsmittel, enthaltend eine Kombination aus
a) 5 bis 25 Gew.%, bezogen auf Melamin, an Dicyandiamid und
b) 8 bis 30 Gew.%, bezogen auf Melamin, an wasserlöslichem Polyalkohol gemäß Anspruch 1 besteht, wobei das molare Verhältnis von Formaldehyd zu Melamin 1,2 bis 2,5 beträgt, und daß die bei der Imprägnierung erhaltenen Filme zu einem Laminat verpreßt, gegebenenfalls teilweise ausgehärtet, nachverformt und dabei vollständig ausgehärtet werden.

7. Verwendung von
a) 5 bis 25 Gew.%, bezogen auf Melamin, an Dicyandiamid und
b) 8 bis 30 Gew.%, bezogen auf Melamin, an wasserlöslichem Polyalkohol gemäß Anspruch 1
als Modifizierungsmittel bei der Kondensation von Melamin-Formaldehydharzen zur Verbesserung der post-forming Eigenschaften bei hoher Kochwasserresistenz.

8. Verfahren zur Verbesserung der post-forming-Eigenschaften bei hoher Kochwasserresistenz von Melamin-Formaldehydharzen, **dadurch gekennzeichnet, daß** bei der Kondensation der Melamin-Formaldehydharze aus Melamin, Formaldehyd und Modifizierungsmitteln,
a) 5 bis 25 Gew.%, bezogen auf Melamin, an Dicyandiamid und
b) 8 bis 30 Gew.%, bezogen auf Melamin, an wasserlöslichem Polyalkohol gemäß Anspruch 1 als Modifizierungsmittel zugemischt werden, und das molare Verhältnis von Formaldehyd zu Melamin 1,2 bis 2,5 beträgt.

## Claims

1. Modified melamine-formaldehyde resins having improved postforming properties and high boiling water resistance, **characterized in that** they consist of a condensate of formaldehyde, melamine and modifier comprising a combination of
a) 5 to 25% by weight, based on melamine, of dicyandiamide, and
b) 8 to 30% by weight, based on melamine, of one of the water-soluble polyalcohols trimethylolpropane, trimethylolethane, trishydroxyethyl isocyanurate, neopentylglycol, 1,4-dimethylolcyclohexane, 4-methyl-2,4-pentanediol, 1,6-hexanediol, 3-methyl-1,3,5-pentanediol or 2,2,4-trimethyl-1,3-pentanediol or mixtures thereof,
the molar ratio of formaldehyde to melamine being within the range from 1.2 to 2.5.

2. Modified melamine-formaldehyde resins according to Claim 1, **characterized in that** the modifier comprises a combination of
a) 8 to 18% by weight, based on melamine, of dicyandiamide, and
b) 12 to 22% by weight, based on melamine, of water-soluble polyalcohol according to Claim 1.

3. Modified melamine-formaldehyde resins according to Claim 1, **characterized in that** they comprise formaldehyde and melamine in a molar ratio of 1.4:1 to 2:1.

4. Use of a mixture of formaldehyde, melamine, 5 to 25% by weight, based on melamine, of dicyandiamide and 8 to 30% by weight, based on melamine, of water-soluble polyalcohol according to Claim 1, which comprises formaldehyde and melamine in a molar ratio of from 1.2:1 to 2.5:1, for producing modified melamine-formaldehyde resins.

5. Melamine resin laminates, **characterized in that** they consist of paper or fabric webs impregnated with modified melamine resins according to Claim 1.

6. Process for producing melamine resin laminates, **characterized in that** it comprises impregnating a paper or fabric web with a modified melamine resin comprising a condensate of formaldehyde, melamine and modifier comprising a combination of
a) 5 to 25% by weight, based on melamine, of dicyandiamide, and
b) 8 to 30% by weight, based on melamine, of water-soluble polyalcohol according to Claim 1, the molar ratio of formaldehyde to melamine being within the range from 1.2:1 to 2.5:1, pressing the films obtained in the impregnation together to form a laminate, optionally partially curing the laminate, and postforming the optionally partially cured laminate, completing the cure in the process.

7. Use of
a) 5 to 25% by weight, based on melamine, of dicyandiamide, and
b) 8 to 30% by weight, based on melamine, of water-soluble polyalcohol as per Claim 1
as a modifier in the condensation of melamine-formaldehyde resins to improve the postforming properties coupled with high boiling water resistance.

8. Method for improving the postforming properties of melamine-formaldehyde resins coupled with high boiling water resistance, **characterized in that** the condensation of the melamine-formaldehyde resins from melamine, formaldehyde and modifier is carried out in the presence of
a) 5 to 25% by weight, based on melamine, of dicyandiamide, and
b) 8 to 30% by weight, based on melamine, of water-soluble polyalcohol as per Claim 1 as an admixed modifier, and the molar ratio of formaldehyde to melamine is in the range from 1.2 to 2.5.

## Revendications

1. Résines de mélamine-formaldéhyde modifiées présentant des propriétés de post-formage améliorées et une résistance à l'eau bouillante élevée, **caractérisées en ce qu'**elles sont constituées d'un produit de condensation de formaldéhyde, de mélamine et d'un agent modificateur, comprenant une combinaison de
a) de 5 à 25 % en poids, par rapport à la mélamine, de dicyanodiamide et
b) de 8 à 30 % en poids, par rapport à la mélamine, de l'un des polyalcools hydrosolubles triméthylolpropane, triméthyloléthane, trishydroxyéthylisocyanurate, néopentylglycol, 1,4-diméthylolcyclohexane, 4-méthyl-2,4-pentanediol, 1,6-hexanediol, 3-méthyl-1,3,5-pentanediol ou 2,2,4-triméthyl-1,3-pentanediol ou de leurs mélanges,
le rapport molaire entre le formaldéhyde et la mélamine étant de 1,2 à 2,5.

2. Résines de mélamine-formaldéhyde modifiées selon la revendication 1, **caractérisées en ce que** l'agent modificateur comprend une combinaison de
a) de 8 à 18 % en poids, par rapport à la mélamine, de dicyanodiamide et
b) de 12 à 22 % en poids, par rapport à la mélamine, de polyalcool hydrosoluble selon la revendication 1.

3. Résines de mélanine-formaldéhyde modifiées selon la revendication 1, **caractérisées en ce qu'**elles comprennent du formaldéhyde et de la mélamine en un rapport molaire de 1,4 à 2:1.

4. Utilisation d'un mélange de formaldéhyde, de mélamine, de 5 à 25 % en poids, par rapport à la mélamine, de dicyanodiamide et de 8 à 30 % en poids, par rapport à la mélamine, de polyalcool hydrosoluble selon la revendication 1, comprenant du formaldéhyde et de la mélamine en un rapport molaire de 1,2 à 2,5, pour la préparation de résines de mélamine-formaldéhyde modifiées.

5. Stratifiés de résine mélaminique, **caractérisés en ce qu'**ils sont constitués de bandes de papier ou de tissu imprégnées de résines mélaminiques modifiées selon la revendication 1.

6. Procédé de production de stratifiés de résines mélaminiques, **caractérisé en ce qu'**une bande de papier ou de tissu est imprégnée d'une résine mélaminique modifiée qui est constituée d'un produit de condensation de formaldéhyde, de mélamine et d'un agent modificateur, comprenant une combinaison de
a) de 5 à 25 % en poids, par rapport à la mélamine, de dicyanodiamide et
b) de 8 à 30 % en poids, par rapport à la mélamine, de polyalcool hydrosoluble selon la revendication 1, le rapport molaire entre le formaldéhyde et la mélamine étant de 1,2 à 2,5, et **en ce que** les films obtenus lors de l'imprégnation sont comprimés pour donner un stratifié, éventuellement durcis partiellement, puis façonnés et ainsi entièrement durcis.

7. Utilisation de
a) de 5 à 25 % en poids, par rapport à la mélamine, de dicyanodiamide et
b) de 8 à 30 % en poids, par rapport à la mélamine, de polyalcool hydrosoluble selon la revendication 1,
en tant qu'agent modificateur lors de la condensation de résines de mélamine-formaldéhyde pour améliorer les propriétés de post-formage avec une résistance à l'eau bouillante élevée.

8. Procédé d'amélioration des propriétés de post-formage avec une résistance à l'eau bouillante élevée de résines de mélamine-formaldéhyde, **caractérisé en ce que** lors de la condensation des résines de mélamine-formaldéhyde à partir de mélamine, de formaldéhyde et d'agents modificateurs,
a) de 5 à 25 % en poids, par rapport à la mélamine, de dicyanodiamide et
b) de 8 à 30 % en poids, par rapport à la mélamine, de polyalcool hydrosoluble selon la revendication 1 sont ajoutés en tant qu'agent modificateur, et le rapport molaire entre le formaldéhyde et la mélamine est de 1,2 à 2,5.
